# EUROPEAN PATENT APPLICATION

(11) **EP 1 227 266 A2**
(43) Date of publication of application: **31.07.2002**
(21) Application number: 01830414.7
(22) Date of filing: 21.06.2001
(51) Int. Cl.: F16H 61/00, F16H 55/56

(54) **A pulley, for instance for continuously variable transmissions , and component therefor**

(30) Priority: 26.01.2001 IT TO010067
(71) Applicant: ADLER S.p.A., 38068 Rovereto (Trento) (IT)
(72) Inventor: Morone, Alfio Ersilio, 20129 (Milano) (IT)
(74) Representative: Bosotti, Luciano

(57) **Abstract**

The centrifugal weight (7) has a general roller conformation with a first surface (10), a second surface (11) and, preferably, a third surface (13), all of which are on the whole plane. Said surfaces are designed to co-operate, respectively, in a sliding relationship on the co-operating surface (8a) of the roller-contrast plate (8), in a relationship of abutment with the radially external portion (3b) of the co-operating surface of the mobile half-pulley, and again in a relationship of resting on the hub (5) of the same mobile half-pulley (3). The expression "on the whole plane" indicates both surfaces that are truly plane and, in general, surfaces with large radiuses of curvature.

## Description

The present invention relates in general to centrifugally operating pulleys.

Pulleys of this type are used, for example, in continuously variable transmissions (CVTs). Variable speed drives of this type are used, for example, in two-wheeled vehicles, such as scooters, or in four-wheeled vehicles, such as small four-wheeled vehicles, or else in vehicles for particular uses, such as golf carts, snowmobiles, etc.

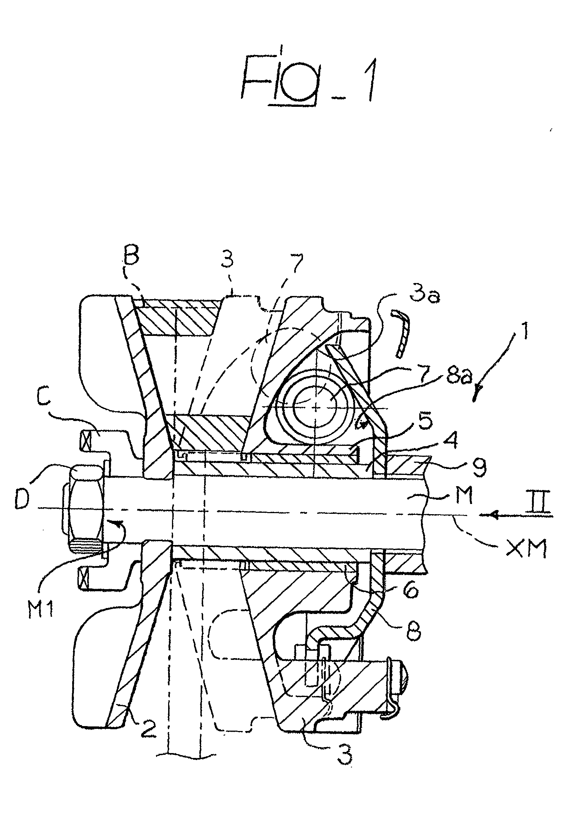

Figure 1 illustrates, in diametral section, a pulley of the type specified above, made according to the prior art.

The pulley, which is designated, as a whole, by 1 and designed to be mounted on a driving shaft M, basically comprises two parts, or half-pulleys, which are generally referred to as fixed half-pulley and mobile half-pulley, here respectively designated by the reference numbers 2 and 3.

The terms "fixed" and "mobile" refer to the movement of axial sliding with respect to the principal axis XM of the driving shaft M.

The fixed half-pulley 2 is in fact rigidly fixed to the shaft M in a position corresponding to a threaded end shank M1 by means of a clamping collar C and a nut D, in such a way that the half-pulley 2 is to all effects and purposes integral with the driving shaft M, it being, of course, able to rotate with the latter about the axis XM.

The fixed half-pulley 2 carries, associated to it (possibly formed of a single piece by means of a common process of pressure die-casting), a tubular sleeve 4 on which the hub 5 of the mobile half-pulley 3 is slidingly fitted, the said hub also being tubular.

As illustrated in the drawing, the hub 5 is usually made of one piece with the corresponding mobile half-pulley 3 by means of a common process of pressure die-casting.

Usually between the sleeve 4 and the hub 5 an element 6 is set this also being of a tubular shape (i.e., in practice a plain bearing or bushing), which is able to follow the sleeve 5 of the half-pulley 3 in its axial sliding movement with respect to the sleeve 4 (and hence with respect to the driving shaft M and to the fixed half-pulley 2), as schematically illustrated by the dashed line in Figure 1.

The arrangement described above thus enables the mobile half-pulley 3 to move with respect to the fixed half-pulley 2 in the direction of the axis XM of the shaft M between the following two positions:
- a position in which the mobile half-pulley 3 is at a maximum distance away, as represented in Figure 1 by the solid line; and
- a position of maximum approach, represented schematically, again in Figure 1, by a dashed line.

The above-mentioned two positions correspond to respective extreme positions of winding of a belt B on the pulley 1, the said belt B being designed to perform transmission of the movement of rotation between the pulley 1, functioning as a drive pulley, and another pulley (not illustrated) designed to function as a driven pulley of a continuously variable transmission.

In the above configuration of use, the aforesaid two positions of maximum recession and maximum approach therefore respectively correspond to the lowest transmission ratio and to the highest transmission ratio.

The above corresponds to criteria that are altogether known to the prior art, and that therefore do not require any detailed illustration herein, also in so far as they are not important for the purpose of understanding the present invention.

Likewise known is the fact that the movement of approach of the mobile half-pulley 3 with respect to the fixed half-pulley 2 is obtained, through all the intermediate positions comprised between the aforesaid extreme positions described previously, under the action of centrifugal weights 7. In the solutions that are prevalent in the prior art, the said centrifugal weights usually consist of rollers (for example, arranged in three pairs of rollers set 120° apart along the peripheral development of the pulley 1). The weights 7 are designed to act between a surface of thrust 3a, made on the side of the mobile half-pulley 3 opposite to the fixed half-pulley 2, and an abutment or contrast element 8, which is rigidly connected to the hub 4 of the fixed half-pulley 2 possibly owing to the presence of a fixing element 9.

Since the contrast element 8 is axially integral with the fixed half-pulley 2, it causes the centrifugal force to which the weights 7 are subjected with an intensity that increases with the increase in speed of rotation of the pulley 1 to result in a stress applied on the thrust surface 3a in such a way as to promote advance of the mobile half-pulley 3 towards the fixed half-pulley 2.

The contrast element 8 (which, because of its function, is referred to as a "roller-contrast plate") usually consists of a piece of sheet metal pressed and blanked so as bestow on it a general plate-like or cup-like conformation with a star-shaped or spoked structure.

In practice, since the rollers (which, in the example according to the prior art in Figure 1, constitute the centrifugal weights 7) are in contact on two opposite surfaces, they cannot rotate, but perform their function by sliding on the surfaces between which they act, namely, the surface 3a and the surface facing the latter, designated by 8a, of the contrast element 8.

This sliding phenomenon, together with the fact that the area of contact between the shell surface of the rollers in question and the surfaces 3a and 8a is very small (nominally linear), is likely to produce fast wear of the rollers.

In certain cases it is found, in fact, that, after a relatively short period of use (even after just a few kilometres have been covered by the vehicle equipped with the variable-speed drive comprising the pulley in question), the rollers undergo extensive and irregular wear, such as to change the shape of each roller and consequently modify the behaviour of the transmission. In fact this change in shape has repercussions on the travel of the mobile half-pulley, and hence on operation of the transmission.

The purpose of the present invention is to provide a solution that enables the type of drawback referred to above to be overcome.

According to the present invention, the above purpose is achieved thanks to a pulley having the characteristics specifically referred to in the ensuing claims. The invention also relates, independently, to a centrifugal weight that can be used in said pulley.

Basically, in the solution according to the invention, the centrifugal weights are given a shape that is different from the typical shape of revolution of traditional rollers.

In particular, in the solution according to the invention the said weights are made with a shape having special contact surfaces that are, on the whole, plane (i.e., either truly plane or else with large radiuses of curvature).

In this way, it is possible to obtain right from the start - i.e. with a pulley that is new - an area of contact and sliding on the contrast element that is considerably larger than the area in the case of perfectly cylindrical centrifugal weights. Consequently, the effect of wear is minimal, if not in practice negligible.

In addition, the solution according to the invention makes it possible to obtain, given the same dimensions of the area of assembly of the centrifugal weights (namely, given the same conformation of the surfaces 3a and 8a referred to previously), an increase in the travel of displacement of the mobile half-pulley between the two end positions of its movement with respect to the fixed half-pulley.

For reasons of completeness, it must be said that using, in the case of a pulley of the type described, centrifugal weights having at least one plane surface is in itself known, for example from the documents WO-A-95/00779 and WO-A-96/05454. The solutions described in these prior documents require, however, that the entire structure of the pulley be in practice adapted to the characteristics of shape of the centrifugal weights used.

Instead, the solution according to the invention is suitable for being implemented also in the case of pulleys the structure of which, except for the criteria of construction of the centrifugal weights, is in fact identical to the structure in already known technical solutions, such as the one represented in Figure 1.

The invention will now be described, purely by way of non-limiting example, with reference to the annexed drawings, in which:
- Figure **1**, which refers to the prior art, has already been extensively described previously; and
- Figures **2** and **3** illustrate, at a scale purposely enlarged for reasons of greater clarity, the innovative characteristics of the solution according to the invention, represented in two possible different operating positions.

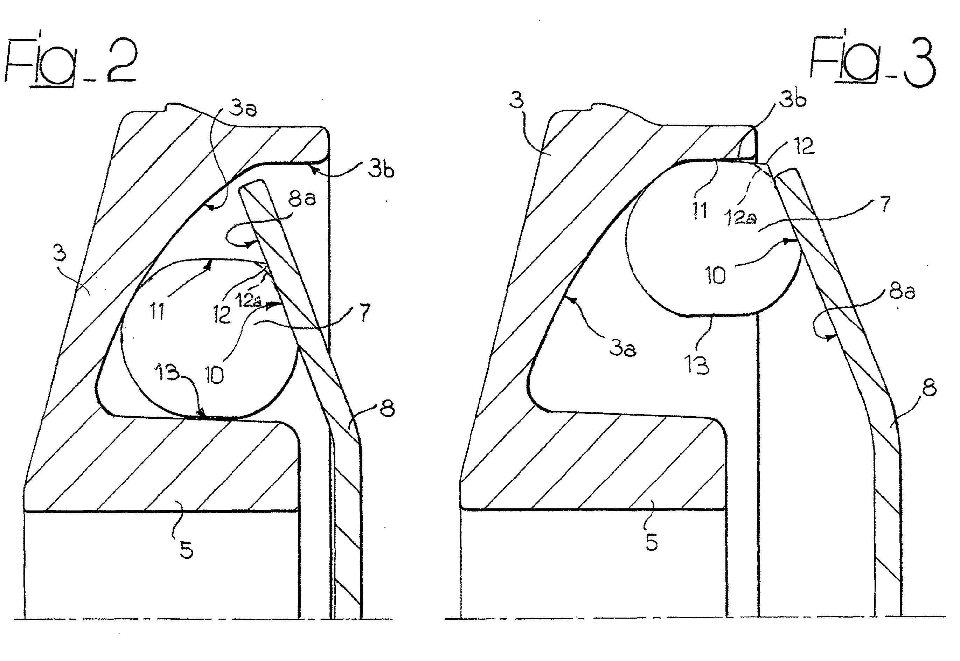

Again with reference to Figures 2 and 3, it should be said that the corresponding representations exclusively regard the parts of the pulley designated by the reference numbers 3 (mobile half-pulley), 7 (centrifugal weights), and 8 (contrast element). The other elements of the pulley are not specifically represented in Figures 2 and 3; it is therefore to be understood that they correspond, also for the purposes of the exemplary of embodiment of the invention here illustrated (which, it is emphasized, is purely an example and hence must not be interpreted as limiting the scope of the invention in any way), to those represented in Figure 1; i.e., they are either identical or equivalent.

In particular, it will be immediately appreciated that the representation of Figure 2 substantially corresponds to the operating position of the pulley represented by the solid line in Figure 1, whilst the operating condition represented in Figure 3 substantially corresponds to the operating position represented by the dashed line in Figure 1.

The term "substantially" is meant to take into account the fact that, as will be better seen in what follows, the adoption of the solution according to the invention makes it possible to achieve, all other things being equal, an extension or prolongation of the range of movement of the mobile half-pulley 3 between the two aforesaid end positions.

In the representations of Figures 2 and 3 there is moreover highlighted the presence, in the external region of the surface 3a, of an end or radially distal portion 3b that basically extends over a cylindrical surface centred about the principal axis XM of rotation of the pulley. It will be appreciated that the said surface itself is present also in the solution according to the prior art represented in Figure 1.

The centrifugal weights 7 used in the solution according to the invention may be viewed as being ideally obtained starting from a weight consisting of a cylindrical body that has been flattened or squashed in such a way as to form two - or, in the embodiment currently preferred, three - surfaces that are on the whole (for the meaning to be attributed to the expression "on the whole", see later), respectively designated by 10, 11 and 13.

The said surfaces 10, 11 and 13 are respectively designed to co-operate with the surface 8a, with the distal portion 3b of the surface 3a, and with the external surface of the hub 5 of the mobile half-pulley 3.

In the views of Figures 2 and 3 (basically constituting cross-sectional views of the weights 7), the aforesaid surfaces 10, 11, 13 are represented as actually plane in order to highlight their presence more clearly. The surfaces 10 and 11 are moreover mutually contiguous and are preferably connected along an edge 12, in such a way as to form an angle (or, more correctly, a dihedron).

In actual fact it is not at all essential, for the purposes of the implementation of the present invention, for the surfaces 10, 11 and 13 to be altogether plane. This applies in particular to the surface 11 which, as will be better seen in what follows, basically performs the function of reducing the overall dimensions. What matters most is that the surface each time considered should present a large radius of curvature, without the said radius having necessarily to be infinite, as in the case of a perfectly plane surface.

Furthermore, the aforesaid surfaces (and in particular the surface 11) may possibly, but not necessarily, present a slightly arched conformation designed to allow for the fact that, for example, both the surface 3b and the surface 8a, as well as the external surface of the hub 5 may be, at least in some cases, defined by respective surfaces of rotation about the main axis XM of the pulley. It is for this reason that the surfaces 10 and 11 were previously described as being "on the whole" plane.

The presence of the edge 12 is not at all an imperative characteristic: between the surfaces 10 and 11 it is perfectly possible to envisage a radiusing surface, such as the surface 12a represented by dashed lines in Figures 2 and 3.

The solution described above makes it possible to have contact surfaces of the centrifugal weights 7 that are decidedly larger given the same overall dimensions if compared to a traditional centrifugal weight consisting of a roller.

In particular, the surface 10 of contact with the contrast element 8 is configured in such a way as to have an extensive area of contact with the surface 8a of said element, whilst in the area of contact with the surface 3a it is possible to obtain a radius of curvature that is greater than the one obtainable, given the same overall dimensions, with a cylindrical weight. At best, it is possible to obtain a radius of curvature that is equal to that of the roller race.

The increase in the contact surface consequently reduces the contact pressure and hence the effect of wear, which precisely results from the contact pressure.

In addition to a greater wear resistance and hence a longer duration of the centrifugal weights 7, the solution according to the invention enables a greater degree of constancy to be achieved in the transmission behaviour, given that this behaviour is no longer affected by possible dimensional modifications due to the onset of altogether irregular phenomena of wear, as instead occurs in traditional weights in the form of rollers.

In the solution according to the invention, the co-operation, for example, between the centrifugal weight 7 and the contrast element 8 occurs in fact always in an area corresponding to the surface 10, so that any phenomenon of (contained) wear of the centrifugal weight takes place over time in a distributed and uniform way always on that surface.

In addition to this, the presence of the surface 11, which is also on the whole plane (for the expression "on the whole" see what has already been said previously) enables, given the same overall dimensions as compared to a traditional roller, a greater range of the movement of enlargement of the "container" of the weights 7 (i.e., of the space or chamber between the surfaces 3a and 8a) when the weights 7 themselves are in the radially outermost position (see Figure 3). In this condition, in fact, the weights 7 move with the plane surface 11 impinging upon the external or distal region 3b of the surface 3a.

In a symmetrical way (see Figure 2), the presence of the plane surface 10 enables the aforesaid container to assume smaller dimensions when the surface 8a is in its position of maximum approach to the surface 3a.

Also the (optional) presence of the surface 13 - with a high radius of curvature, if not altogether plane, and located, in the sphere of the centrifugal weight 7, in a position roughly diametrically opposite to the surface 11 - further reduces the overall dimensions of the centrifugal weight 7 within the space in which its movement takes place.

It can be readily understood that with the solution according to the invention it is possible to obtain a greater travel or range of movement of the mobile half-pulley 3 with respect to the fixed half-pulley 2 (see again Figure 1).

In other words, the solution according to the invention enables the following to be obtained simultaneously:
- a reduction in the "low" transmission ratio (with better performance, for example, during starting or pickup of the vehicle); and
- an increase in the "high" transmission ratio (designed to be used in cruising conditions).

It will be appreciated that the foregoing is obtained by acting exclusively on the weights 7, hence without any need to make any interventions of modification on the other parts of the pulley and, in particular, on the mobile half-pulley 3 (surface 3a) and on the contrast element 8.

Of course, without prejudice to the principle of the invention, the details of construction and the embodiments may be varied widely with respect to what is described and illustrated herein, without thereby departing from the scope of the present invention.

## Claims

1. A pulley (1) comprising a half-pulley (3) which can perform a movement of axial sliding with respect to the axis of rotation (XM) of the pulley, at least one centrifugal weight (7) which is able to co-operate with said mobile half-pulley (3), and an element (8) functioning as a contrast element for said at least one centrifugal weight (7) to produce the aforesaid axial movement of the mobile half-pulley (3) as a result of a movement of displacement of said at least one centrifugal weight (7) induced by the rotation of the pulley (1); said movement of displacement of said at least one centrifugal weight (7) taking place along respective surfaces of co-operation (3a, 8a) of said mobile half-pulley (3) and said contrast element (8), **characterized in that** said at least one centrifugal weight (7) has a general roller conformation, with at least one surface (10) which is on the whole plane and which can co-operate in a sliding relationship with said respective co-operating surface (8a) of said contrast element (8).

2. The pulley according to Claim 1, **characterized in that** said respective co-operating surface (3a) of said mobile half-pulley (3) has a radially external portion (3b) which extends with a development substantially cylindrical centred about said axis of rotation (XM), and **in that** said at least one centrifugal weight (7) comprises a further surface (11) which is on the whole plane and which can co-operate in a relationship of contrast with said radially external portion (3b) of said respective surface of co-operation (3a) of said mobile half-pulley.

3. The pulley according to Claim 1 or Claim 2, **characterized in that** said at least one surface (10) that is on the whole plane and said further surface (11) that is on the whole plane are mutually contiguous.

4. The pulley according to Claim 3, **characterized in that** said at least one surface (10) that is on the whole plane and said further surface (11) that is on the whole plane together define an edge (12) in said at least one centrifugal weight (7).

5. The pulley according to Claim 3, **characterized in that** between said at least one surface (10) that is on the whole plane and said further surface (11) that is on the whole plane there is present a radiusing surface (12a).

6. The pulley according to any one of Claims 1 to 5, **characterized in that** said mobile half-pulley (3) has a hub part (5), and **in that** said at least one centrifugal weight (7) comprises yet a further surface (13) which is on the whole plane and which can co-operate in a relationship of rest against said hub part (5) of said mobile half-pulley (3).

7. The pulley according to Claims 2 and 6, **characterized in that** said further surface (11) that is on the whole plane and said yet further surface (13) that is on the whole plane are approximately diametrically opposite to one another in the sphere of said centrifugal weight (7).

8. A centrifugal weight (7) for pulleys comprising a half-pulley (3), which can perform a movement of axial sliding with respect to the axis of rotation (XM) of the pulley, and an element (8) functioning as a contrast element for said at least one centrifugal weight (3) to produce the aforesaid axial movement of the mobile half-pulley (3) as a result of a movement of displacement the centrifugal weight induced by the rotation of the pulley (1); said movement of displacement taking place along respective surfaces of co-operation (3a, 8a) of said mobile half-pulley (3) and said contrast element (3), **characterized in that** said at least one centrifugal weight (7) has a general roller conformation, with at least one surface (10) which is on the whole plane and which can co-operate in a sliding relationship with said respective co-operating surface (8a) of said contrast element (8).

9. The centrifugal weight according to Claim 8, for use in pulleys in which said respective co-operating surface (3a) of said mobile half-pulley (3) has a radially external portion (3b) which extends with a development substantially cylindrical centred about said axis of rotation (XM), **characterized in that** it comprises a further surface (11) which is on the whole plane and which can co-operate in a relationship of contrast with said radially external portion (3b) of said respective co-operating surface (3a) of said mobile half-pulley.

10. The centrifugal weight according to Claim 9, **characterized in that** said at least one surface (10) that is on the whole plane and said further surface (11) that is on the whole plane are mutually contiguous.

11. The centrifugal weight according to Claim 10, **characterized in that** said at least one surface (10) that is on the whole plane and said further surface (11) that is on the whole plane together define an edge (12) in said at least one centrifugal weight (7).

12. The centrifugal weight according to Claim 10, **characterized in that** between said at least one surface (10) that is on the whole plane and said further surface (11) that is on the whole plane there is present a radiusing surface (12a).

13. The centrifugal weight according to any one of the preceding claims from Claim 8 to Claim 12, for use in pulleys in which said mobile half-pulley (3) has a hub part (5), **characterized in that** it comprises yet a further surface (13) which is on the whole plane and which can co-operate in a relationship of rest against said hub part (5) of said mobile half-pulley (3).

14. The centrifugal weight according Claims 9 and 13, **characterized in that** said further surface (11) that is on the whole plane and said yet further surface (13) that is on the whole plane are approximately diametrically opposite to one another in the sphere of said centrifugal weight (7).
